# EUROPÄISCHE PATENTSCHRIFT

(11) **EP 0 648 629 B1**
(45) Veröffentlichungstag und Bekanntmachung des Hinweises auf die Patenterteilung: **04.06.1997**
(21) Anmeldenummer: 94115244.9
(22) Anmeldetag: 28.09.1994
(51) Int. Cl.: B60J 7/10

(54) **Aufbau für Personenwagen**
Vehicle body
Carrosserie de véhicule

(30) Priorität: 15.10.1993 DE 4335653 U
(43) Veröffentlichungstag der Anmeldung: 19.04.1995
(60) Teilanmeldung: 96111343.8
(73) Patentinhaber: Dr.Ing.h.c. F. Porsche Aktiengesellschaft, 70435 Stuttgart (DE)
(72) Erfinder: Murkett, Stephen, D-70839 Gerlingen (DE); Bayer, Jürgen, D-71287 Weissach (DE); Mayer, Johann, D-85238 Petershausen (DE); Ulbrich, Thomas, D-86916 Kaufering (DE); Danzl, Martin, D-80797 München (DE)

(56) Entgegenhaltungen:
- FR-A- 958 347
- GB-A- 2 184 404
- GB-A- 2 251 223
- US-A- 4 801 174

## Beschreibung

Die Erfindung betrifft einen Aufbau für Personenwagen nach dem Oberbegriff des Patentanspruchs 1. Ein derartiger Aufbau ist aus der US-A-4 801 174 bekannt.

Es ist ein Personenwagen mit einem Aufsatz bekannt, DE-C-822 658, der ein geschlossenes Dach umfaßt, was die freie Sicht der Insassen beeinträchtigt. Sinngemäß gilt dies für den Coupè-Aufsatz gem. der DE-B-11 31 528.

Aufgabe der Erfindung ist es, einen Aufbau-Aufsatz eines Personenwagens so zu gestalten, daß die Sicht der Insassen ins Freie verbessert wird und ein relativ großer Dachbereich zu öffnen ist.

Erfindungsgemäß wird diese Aufgabe durch die kennzeichnenden Merkmale des Patentanspruchs gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß der Aufbau mit seinen Dachabschnitten, die aus Glas bestehen können und teilweise zu öffnen sind, eine zweckgerichtete Kombination aus geschlossenem und offenem Aufbau bilden. Dabei ist nicht nur die Sicht für die Insassen nach oben ausgezeichnet, z.B. um Vorgänge und Landschaftsbilder über dem Dach zu beobachten, sondern es wird durch die beweglichen Dachabschnitte eine gute Be- und Entlüftung des Fahrgastraumes erzielt bzw. die Insassen können, ähnlich wie an einem offenen Fahrzeug, die sich ihnen bietende Umgebung wahrnehmen.

Die beweglichen Dachabschnitte sind nach Art eines Schiebedaches aufgebaut, wobei der erste Dachabschnitt ein Windabweiser ist und der zweite Dachabschnitt das eigentliche Schiebedach bildet. Letzterer ist mittels geeigneter Kinematik und Führungen unter den dritten Dachabschnitt verstellbar ausgebildet.

Der Aufbau besteht aus leicht produzierbaren Rahmen und Trägern, die aus Stahl, Kunststoff oder Leichtmetall hergestellt sein können. Der dritte Dachabschnitt, er ist wie die anderen Dachabschnitte ein Glasteil, und die hinteren Seitenfenster sind in Öffnungen des Aufbaus eingesetzt und durch Kleben befestigt. Durch diese Bauweise hat der Aufbau ausreichende Steifigkeit bei vertretbarem Gewicht.

Schließlich kann der Aufbau mit seinen wesentlichen Teilen ein vorgefertigtes Modul sein, der Aufbau kann eine Cabrio-Rahmenstruktur aufweisen durch Schraubverbindungen am Aufbau gehalten ist. Dadurch kann das Modul ohne nennenswerte Änderungen an einem Cabrio-Aufbau befestigt werden, so daß mit relativ geringem Aufwand eine weitere Typenvariante geschaffen ist.

In der Zeichnung wird ein Ausführungsbeispiel der Erfindung gezeigt, das nachstehend näher beschrieben ist.

Es zeigt
- Fig. 1: eine Seitenansicht eines Personenwagens mit dem erfindungsgemäßen Aufbau,
- Fig. 2: eine Teilansicht der Fig. 1,

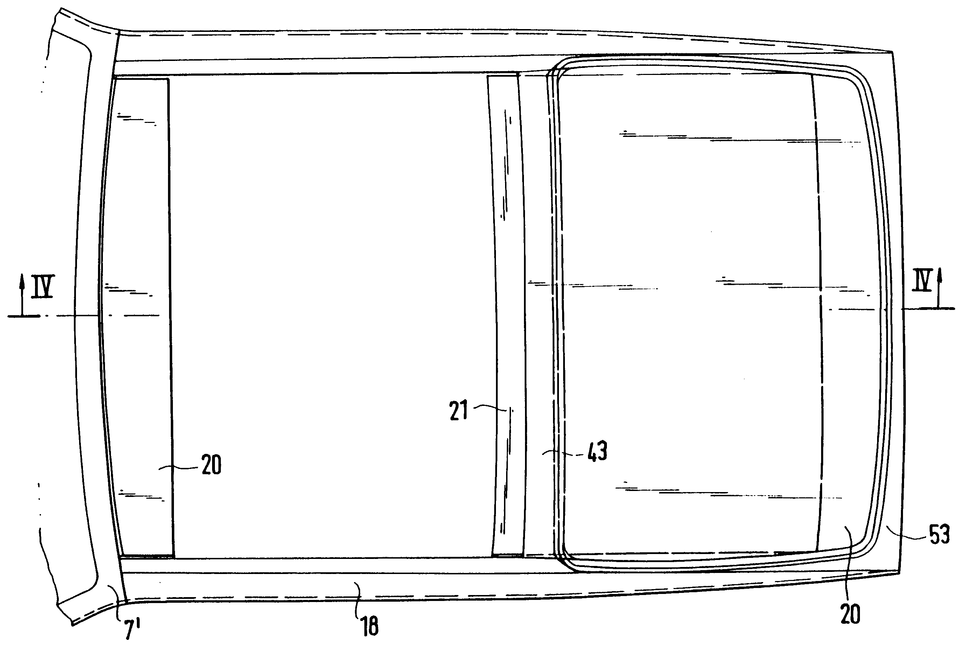

- Fig. 3: eine Ansicht in Pfeilrichtung A der Fig. 1,

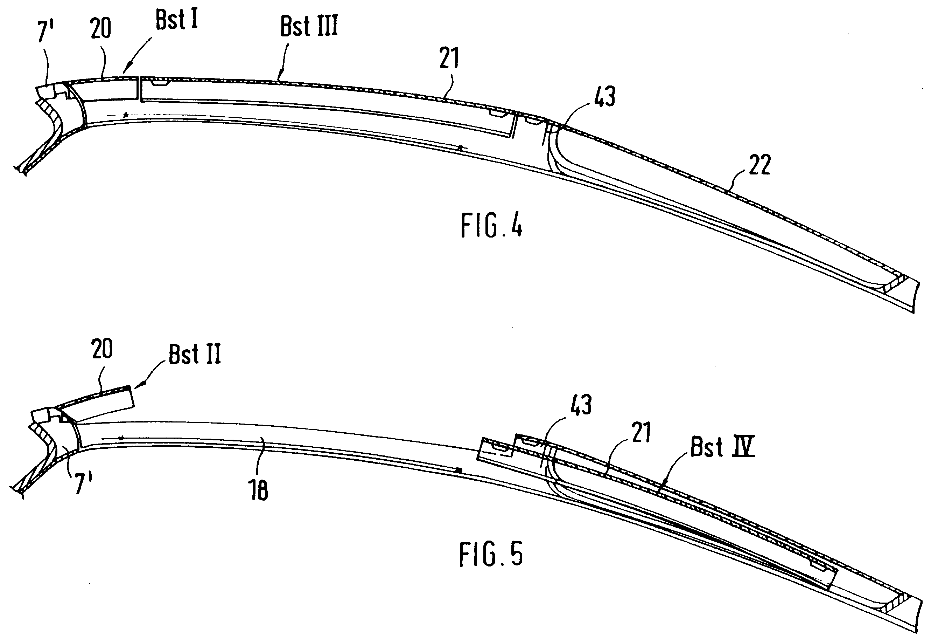

- Fig. 4: einen Schnitt nach der Linie IV-IV der Fig. 3,
- Fig. 5: eine Ansicht entsprechend Fig. 4,
- Fig. 6: einen Schnitt nach der Linie VI-VI der Fig. 1 in größerem Maßstab,
- Fig. 7: einen Schnitt nach der Linie VII-VII der Fig. 1 in größerem Maßstab,
- Fig. 8: eine Einzelheit X der Fig. 1 in größerem Maßstab,
- Fig. 9: eine Einzelheit Y der Fig. 1 in größerem Maßstab.

Der Personenwagen 1 umfaßt einen Aufbau 2, der von Rädern 3 getragen wird. Der Aufbau 2 wird durch einen Grundkörper 4 mit einer Windschutzscheibe 5 und einer Gürtellinie 6 gebildet. Der Grundkörper 4 ist mit einem oberen Aufbau 7 versehen, der an einen oberen Windschutzscheibenrahmen 7' und die Gürtellinie 6 angeschlossen ist, und mit einem Dach 8 einen Fahrgastraum 9 abdeckt. Eine Dachlinie 10, die sich etwa entlang der Mittellängsebene des Personenwagens erstreckt, verläuft zwischen Windschutzscheibenrahmen 7' und einer Heckklappe 11 in einem entgegen der Fahrtrichtung B abfallenden, jedoch durchgängigen Bogen, so daß der Aufbau 2 die Form eines Coupés mit Fließheck aufweist.

Der Grundkörper 4 ist jeweils auf der Fahrzeuglängsseite mit einer Tür 12 versehen, die einen Türkörper 13, ein Dreiecksfenster 14 und ein verschiebbares Seitenfenster 15 aufweist, dessen hintere Türscheibenbegrenzung 16 zwar relativ aufrecht, jedoch entgegen der Fahrtrichtung B leicht geneigt ist. Ein weiteres Seitenfenster 17 ist hinter dem türseitigen Seitenfenster 15 am Aufsatz 6 angeordnet. Das Seitenfenster 17 besitzt dreieckige Grundformen und verjüngt sich entgegen der Fahrtrichtung B.

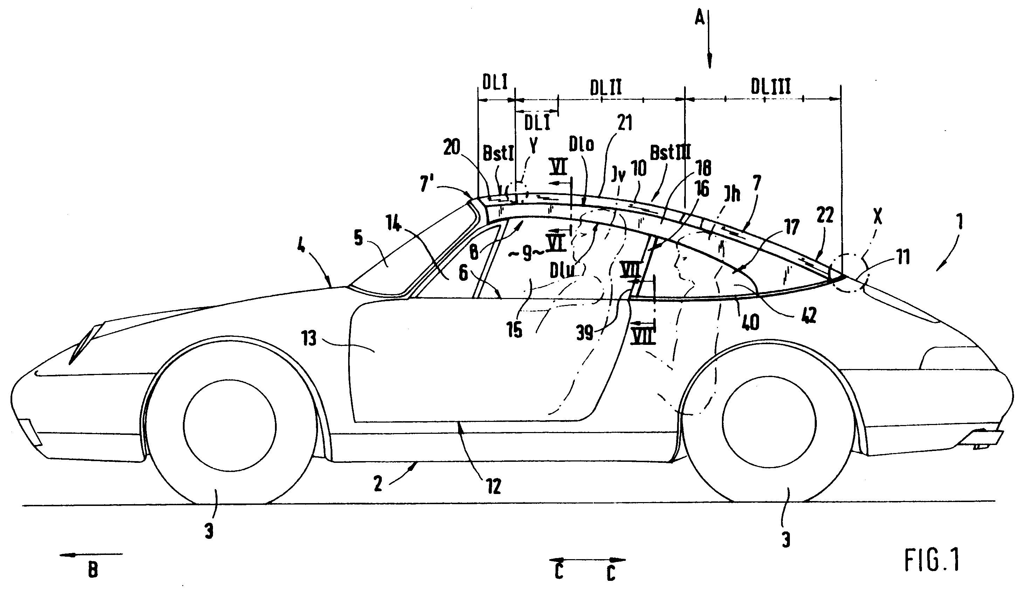

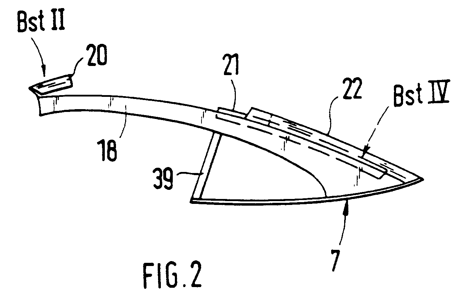

Der Aufbau 7 besitzt die Seitenfenster 15, 17 begrenzende seitliche Dachrahmen 18, zwischen denen - in Fahrzeuglängsrichtung C-C gesehen - hintereinanderliegend ein erster Dachabschnitt 20, ein zweiter Dachabschnitt 21 und ein dritter Dachabschnitt 22 vorgesehen sind. Der erste Dachabschnitt 20 ist zwischen den Betriebsstellungen Bst I und Bst II - Fig. 1 und 2 - winkelbeweglich ausgebildet und wirkt in seiner aufgestellten Betriebsstellung Bst II als Windabweiser, der an dem Dachrahmen 18 oder dem Windschutzscheibenrahmen 7' scharniert sein kann. Der zweite Dachabschnitt 21 ist nach Art eines Schiebedaches längsbeweglich - Betriebsstellungen Bst III und Bst IV - ausgebildet derart, daß er sich unter den dritten Dachabschnitt 22 verschieben läßt, und zwar in die Betriebsstellung Bst IV, wobei der dritte Dachabschnitt 22 fest in den Aufbau 7 eingesetzt ist.

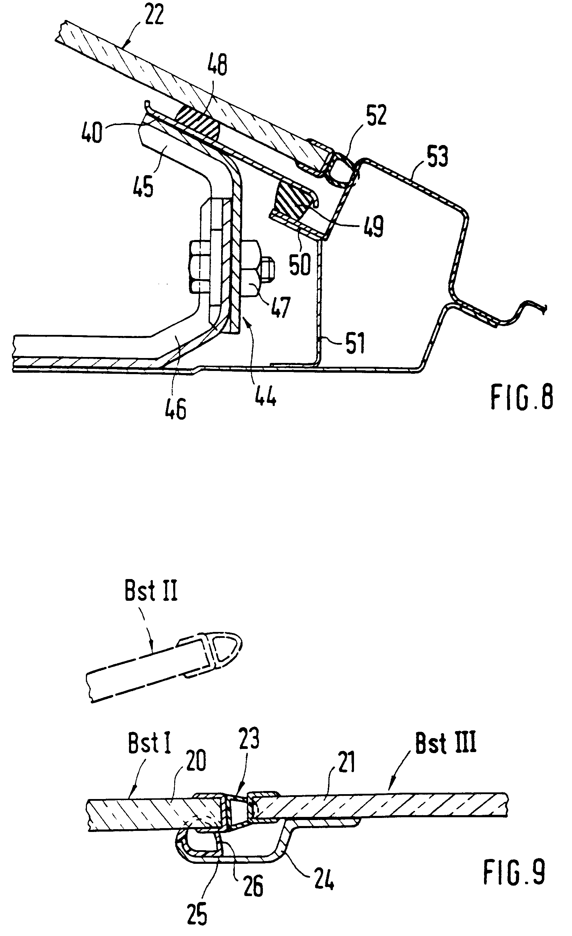

Die Dachabschnitte 20, 21 und 22 sind in der Konstruktionslage oder Grundstellung oberflächenbündig zueinander angeordnet, wobei zwischen den Dachabschnitten 20 und 21 Dichtkörper 23 vorgesehen sind (Fig. 9). In diesem Bereich ist an der Unterseite zwischen Dachabschnitt 21 eine Schiene 24 vorgesehen, die mit einem Steg 25 den ersten Dachabschnitt 20 untergreift, wobei zwischen Steg 25 und dem ersten Dachabschnitt 20 eine Dichtung 26 wirksam ist.

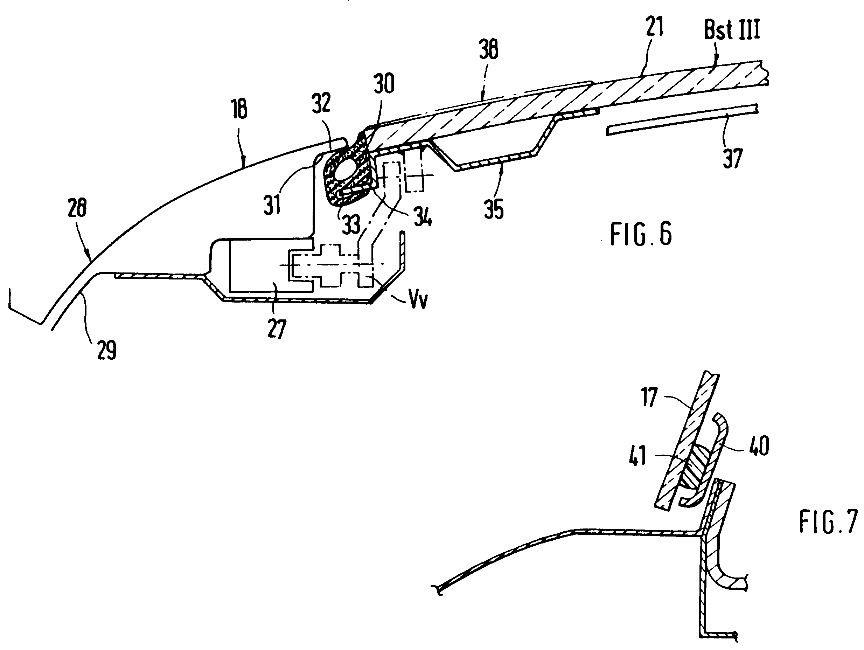

Um den zweiten Dachabschnitt 21 aus der Betriebsstellung Bst III in die Betriebsstellung Bst IV zu bewegen, dient eine Führungsschiene 27 (Fig. 6), die am Dachrahmen 18 angebracht ist. Zwischen der Führungsschiene 27 und dem zweiten Dachabschnitt 21 sind eine oder mehrere Verbindungsvorrichtungen Vv vorgesehen. In Fig. 6 ist dargestellt, daß der Dachrahmen 18 eine Außenschale 28 und eine Innenschale 29 umfaßt, wobei die Führungsschiene 27 an der Innenschale 29 gehalten ist. Der zweite Dachabschnitt 21 wirkt unter Vermittlung eines Dichtkörpers 30 mit der Innenseite 31 eines Flansches 32 zusammen, der durch die Außenschale 28 und die Innenschale 29 gebildet ist. Der Dichtkörper 30 umgreift mit einer Aufnahme 33 einen Flansch 34 eines profilierten Trägers 35, der an der Unterseite 36 des zweiten Dachabschnittes 21 durch geeignete Verfahren befestigt und umlaufend angebracht zur Versteifung des relativ großflächigen Dachabschnittes 21 dient. Die Verbindungsvorrichtung Vv umfaßt ein Hebelwerk, das zur Bewegung des Dachabschnittes 21 einerseits in Fahrzeugslängsrichtung C-C und andererseits in die Betriebsstellung Bst IV dient.

Zur Sicherstellung einer guten Sicht für die Insassen des Personenwagens 1 sind sämtliche Dachabschnitte 20, 21 und 22 aus Sichtglas hergestellt; dabei kann es sich um mehrschichtiges Sonnenschutzglas handeln. Außerdem ist auch phototropes Glas denkbar. Darüber hinaus kann an der Innenseite der Dachabschnitte 20, 21 eine Jalousie 37 (Fig. 6) vorgesehen werden, die z.B. bei Stillstand des Fahrzeuges in eine geschlossene oder Abdeck-Position gebracht werden kann. Auch besteht die Möglichkeit, an der Außenseite des Dachabschnittes 21 im Bereich des Trägers 35 bei 38 das Glas z.B. schwarz einzufärben, wodurch zum einen der Träger 35 verdeckt wird und zum anderen eigentümliche ästhetische Effekte erzielbar sind. Die Einfärbung kann an allen Dachabschnitten umlaufend als Rand vorgesehen sein.

Günstige Verhältnisse für die Länge der Dachabschnitte 20, 21, 22 - in Fahrzeuglängsrichtung C-C gesehen - bei dem Personenwagen des vorliegenden Ausführungsbeispiel ergeben sich, wenn der zweite Dachabschnitt 21 bis hinter die Türscheibenbegrenzung 16 bzw. einen Bereich oberhalb eines Fond-Insassen Ih geführt wird, der hinter einem Front-Insassen Iv sitzt. Dabei ist die Länge DL II und DL III des zweiten Dachabschnittes 21 und des dritten Dachabschnittes 22 etwa vier Mal größer als die Länge DL I des ersten Dachabschnittes 20 (Fig. 1). Ferner können die Dachabschnitte 20 und 21 möglichst breit gestaltet sein, was eine relativ schmale und leichte Konfiguration der Dachrahmen zur Folge hat.

Vom Dachrahmen 18, der die Dachabschnitte 20, 21, 22 begrenzt, weggeführt, und zwar im Bereich der hinteren Türscheibenbegrenzung 16 ist eine Säule 39, die in einen oberhalb der Gürtellinie 6 verlaufenden Stützträger 40 des Aufbaus 7 mündet (Fig. 7), der entlang der Gürtellinie 6 zwischen den gegenüberliegenden Säulen 39 verläuft. Der Stützträger 40 ist im Querschnitt U-förmig ausgebildet und hält mittels eines Klebekörpers 41 das Seitenfenster 17 (Fig. 7) in Lage. Das Seitenfenster 17 ist also in eine Öffnung 42 eingesetzt, die vom seitlichen Dachrahmen 18 der Säule 39 und dem Stützträger 40 begrenzt wird.

Die gegenüberliegenden Dachrahmen 18, die sich gemäß Fig. 1 entgegen Fahrtrichtung B im Querschnitt erweitern, was durch die Linien DLo und DLu verdeutlicht wird, sind im Bereich des dritten Dachabschnittes 22, und zwar benachbart dem zweiten Dachabschnitt 21 mit einem Querträger 43 verbunden, auf dem der dritte Dachabschnitt 22 aufliegt; er ist durch Kleben am Aufbau 7 in Lage gehalten; die Dachlinie 10 und die Linie DLo verlaufen in etwa mit gleichem Abstand zueinander.

Der Aufbau 7 bildet mit den Dachabschnitten 20, 21, 22 den seitlichen Trägern 18, 19, den Säulen 39, dem Querträger 43, dem Stützträger 40 und der hinteren Seitenfenster 17 ein vorgefertigtes Modul, das mit dem Aufbau 2 bzw. Grundkörper 4 durch eine oder mehrere Schraubverbindungen 44 verbunden ist.

Ein Ausführungsbeispiel einer Schraubverbindung ist in Fig. 8 dargestellt. Danach ist der Stützträger 40 mit einem Winkel 45 versehen, der an einen weiteren Winkel 46 des Aufbaues 2 herangeführt ist. Zwischen den beiden Winkeln 45, 46 ist eine Schraube 47 vorgesehen. Der Stützträger 40 ist darüber hinaus zum einen über einen Klebekörper 48 mit dem dritten Dachabschnitt 22 verbunden und zum anderen mittels einer Dichtung 49 an einen Flansch 50 eines inneren Querträgers 51 des Aufbaues 2 herangeführt. Schließlich schließt der dritte Dachabschnitt 22 mit einem Dichtkörper 52 an einen äußeren Querträger 53 an.

## Patentansprüche

1. Aufbau eines Personenwagens mit einem Dach, das oberhalb einer Gürtellinie des Aufbaues einen Fahrgastraum abdeckt, wobei der Aufbau einen Windschutzscheibenrahmen (7') und Seitenfenster begrenzende seitliche Dachrahmen (18,19) umfaßt, zwischen denen sich ein längsbeweglicher Dachabschnitt (21) und ein dessen Verlängerung bildender weiterer Dachabschnitt (22) erstrecken, **dadurch gekennzeichnet**, daß sich zwischen den Dachrahmen ein benachbart dem Windschutzscheibenrahmen (7') angebrachter erster vorderer winkelbeweglicher Dachabschnitt (20), ein daran anschließender zweiter Dachabschnitt (21), der den längsbeweglichen Dachabschnitt bildet, und ein dessen Verlängerung bildender dritter fester Dachabschnitt (22), der den weiteren Dachabschnitt bildet, erstrecken.

2. Aufbau nach Anspruch 1, **dadurch gekennzeichnet**, daß der erste Dachabschnitt (20) als Windabweiser ausgebildet ist und der zweite Dachabschnitt (21) sich nach Art eines Schiebedaches unter den dritten Dachabschnitt (22) verschieben läßt.

3. Aufbau nach Anspruch 1, **dadurch gekennzeichnet**, daß die Dachabschnitte im geschlossenen Zustand oberflächenbündig zueinander ausgerichtet sind.

4. Aufbau nach einem oder mehreren der Ansprüche 1 - 3, **dadurch gekennzeichnet**, daß zwischen dem ersten und dem zweiten Dachabschnitt (20 und 21) bzw. zwischen dem zweiten und dem dritten Dachabschnitt (21 und 22) Dichtkörper (30) vorgesehen sind.

5. Aufbau nach Anspruch 2, **dadurch gekennzeichnet**, daß der zweite Dachabschnitt (21) mit an den seitlichen Dachrahmen angebrachten Führungsschienen (27) zusammenarbeitet.

6. Aufbau nach Anspruch 1, **dadurch gekennzeichnet**, daß die Dachabschnitte aus Glas mit Sonnenschutzeigenschaften bestehen.

7. Aufbau nach Anspruch 1, **dadurch gekennzeichnet**, daß von den seitlichen Dachrahmen im Bereich einer hinteren Türscheibenbegrenzung (16) Säulen (39) weggeführt sind, die in einen oberhalb der Gürtellinie (6) verlaufenden Stützträger (40) münden.

8. Aufbau nach Anspruch 7, **dadurch gekennzeichnet**, daß - entgegen der Fahrtrichtung B gesehen - die Säule, der seitliche Dachrahmen und der Stützträger (40) eine Öffnung (42) begrenzen, in die ein hinteres Seitenfenster (17) eingesetzt ist.

9. Aufbau nach einem oder mehreren der Ansprüche 1 - 8, **dadurch gekennzeichnet**, daß der dritte Dachabschnitt (22) benachbart dem zweiten Dachabschnitt (21) auf einem sich zwischen den seitlichen Dachrahmen erstreckenden Querträger (43) aufliegt.

10. Aufbau nach Anspruch 9, **dadurch gekennzeichnet**, daß der dritte Dachabschnitt (22) und die Seitenfenster durch Kleben mit dem Aufbau verbunden sind.

11. Aufbau nach einem oder mehreren der Ansprüche 1 - 10, **dadurch gekennzeichnet**, daß die Dachabschnitte, die seitlichen Dachträger, die Säulen (39), der Querträger (43), der Stützträger (40) und die Seitenfenster ein vorgefertigtes Modul bilden.

12. Aufbau nach Anspruch 11, **dadurch gekennzeichnet**, daß das Modul durch eine oder mehrere Schraubverbindungen (44) am Aufbau gehalten ist.

## Claims

1. A body of a passenger car with a roof which covers a passenger compartment above a waist line of the body, wherein the body comprises lateral roof frames (18, 19) which bound a windscreen frame (7') and side windows and between which a longitudinally movable roof portion (21) and a further roof portion (22) forming a continuation thereof extend, **characterized in that** a first front roof portion (20) movable at an angle and attached adjacent to the windscreen frame (7'), a second roof portion (21) adjoining the first front roof portion (20) and forming the longitudinally movable roof portion, and a third fixed roof portion (22) forming the continuation thereof and forming the further roof portion, extend between the roof frames.

2. A body according to Claim 1, **characterized in that** the first roof portion (20) is constructed as a wind deflector, and the second roof portion (21) can be displaced below the third roof portion (22) in the manner of a sliding roof.

3. A body according to Claim 1, **characterized in that** the roof portions are orientated with their surfaces flush with one another in the closed state.

4. A body according to one or more of Claims 1 to 3, **characterized in that** sealing members (30) are provided between the first and second roof portions (20 and 21) and between the second and third roof portions (21 and 22) respectively.

5. A body according to Claim 2, **characterized in that** the second roof portion (21) cooperates with guide rails (27) attached to the lateral roof frames.

6. A body according to Claim 1, **characterized in that** the roof portions consist of glass with solar-protection properties.

7. A body according to Claim 1, **characterized in that** columns (39) are directed away from the lateral roof frames in the region of the termination (16) of a rear door window, the columns (39) opening into a carrier support (40) extending above the waist line (6).

8. A body according to Claim 7, **characterized in that** - as viewed contrary to the direction of travel **B** - the column, the lateral roof frame and the support (40) bound an opening (42) into which a rear side window (17) is inserted.

9. A body according to one or more of Claims 1 to 8, **characterized in that** adjacent to the second roof portion (21) the third roof portion (22) rests on a transverse support (43) extending between the lateral roof frames.

10. A body according to Claim 9, **characterized in that** the third roof portion (22) and the side windows are joined to the body by adhesion.

11. A body according to one or more of Claims 1 to 10, **characterized in that** the roof portions, the lateral roof supports, the columns (39), the transverse support (43), the carrier support (40) and the side windows form a pre-fabricated module.

12. A body according to Claim 11, **characterized in that** the module is held on the body by one or more bolt fastenings (44).

## Revendications

1. Carrosserie de voiture particulière, comportant un toit, recouvrant, à un niveau supérieure à une ligne de ceinture de la carrosserie, un habitacle, la carrosserie comprenant un cadre de pare-brise (7') et un cadre de toit (18, 19) latéral, délimitant des fenêtres latérales, cadres entre lesquels s'étendant une première section de toit (21), à mobilité en direction longitudinale, et une section de toit (22) supplémentaire, formant son prolongement, caractérisée en ce que, entre les cadres de toit, s'étendent une première section de toit avant (20), à mobilité angulaire, montée au voisinage du cadre de pare-brise (7'), une deuxième section de toit (21), s'y raccordant et constituant la section de toit à mobilité en direction longitudinale, et une troisième section de toit (22), placée à demeure, constituant son prolongement et constituant la section de toit supplémentaire.

2. Carrosserie selon la revendication 1, caractérisée en ce que la première section de toit (20) est réalisée sous forme de déflecteur de vent et la deuxième section de toit (21) peut être coulissée sous la troisième section de toit (22), à la manière d'un toit ouvrant.

3. Carrosserie selon la revendication 1, caractérisée en ce que, à l'état fermé, les sections toit sont orientées en affleurement de surface.

4. Carrosserie selon l'une ou plusieurs des revendications 1 à 3, caractérisée en ce que, entre la première et la deuxième section de toit (20 et 21), ou entre la deuxième et la troisième section de toit (21 et 22), sont prévus des corps d'étanchéité (20).

5. Carrosserie selon la revendication 2, caractérisée en ce que la deuxième section de toit (21) coopère avec des glissières de guidage (27), montées sur les cadres de toit latéraux.

6. Carrosserie selon la revendication 1, caractérisée en ce que les sections toit sont réalisées en verre à propriété de protection contre le soleil.

7. Carrosserie selon la revendication 1, caractérisée en ce que des colonnes (39), débouchant dans un support d'appui (40) s'étendant au-dessus de la ligne de ceinture (6), partent des cadres de toit latéraux, dans la zone d'une limitation arrière (16) des vitres de porte.

8. Carrosserie selon la revendication 7, caractérisée en ce que, en observant dans la direction inverse de la direction de roulage B - la colonne, le cadre de toit latéral et le support d'appui (40), délimitent une ouverture (42), dans laquelle une fenêtre latérale arrière (17) est insérée.

9. Carrosserie selon l'une ou plusieurs des revendications 1 à 8, caractérisée en ce que la troisième section de toit (32) repose, au voisinage de la deuxième section de toit (21), sur une traverse (43) s'étendant entre les cadres de toit latéraux.

10. Carrosserie selon la revendication 9, caractérisée en ce que la troisième section de toit (32) et les fenêtres latérales sont reliées à la carrosserie par collage.

11. Carrosserie selon l'une ou plusieurs des revendications 1 à 10, caractérisée en ce que les sections toit, les supports de toit latéraux, les colonnes (39), la traverse (43), le support d'appui (40) et les fenêtres latérales constituent un module préfabriqué.

12. Carrosserie selon la revendication 11, caractérisée en ce que le module est fixé sur la carrosserie au moyen d'une ou de plusieurs liaisons vissés (44).
